# EUROPEAN PATENT APPLICATION

(11) **EP 4 227 076 A1**
(43) Date of publication of application: **16.08.2023**
(21) Application number: 22156333.1
(22) Date of filing: 11.02.2022
(51) Int. Cl.: B29D 99/00, B29C 70/52

(54) **TWO-STAGE PULTRUSION FOR MANUFACTURING COMPONENTS OF A WIND TURBINE BLADE**

(71) Applicant: LM Wind Power A/S, 6000 Kolding (DK)
(72) Inventor: LILLEHEDEN, Lars, 6000 Kolding (DK); BAVILOLIAIE, Mahdi, 6000 Kolding (DK); JESPERSEN, Klavs, 6000 Kolding (DK)
(74) Representative: COPA Copenhagen Patents

(57) **Abstract**

The present invention relates to a method of manufacturing a wind turbine blade shell component (38), such as a shell half, in particular a spar cap thereof. The method comprises the steps of pultruding one or more carbon fibre preforms (110) by passing a plurality of resin-impregnated tows of carbon fibre material (68) through a first pultrusion die (112), and subsequently pultruding a plurality of pultrusion plates (64) by passing a plurality of resin-impregnated tows of glass fibre material (70) together with the one or more carbon fibre preforms (110) through a second pultrusion die (114). The pultrusion plates (64) can be arranged on a blade shell material (89) in a mould (77) for the blade shell component, and the pultrusion plates (64) are bonded with the blade shell material to form the blade shell component.

## Description

### Field of the invention

The present invention relates to a method of manufacturing a wind turbine blade shell component, to a pultrusion plate, and to a reinforcing structure for a wind turbine blade, the reinforcing structure comprising a plurality of pultrusion plates.

### Background of the invention

Climate change has created an urgent need for sustainable energy, putting the spotlight on wind power as a cost-effective and clean energy source. Wind turbines typically comprise a tower, generator, gearbox, nacelle, and one or more rotor blades, which capture kinetic energy of wind using known airfoil principles. With increasing energy demand, modern wind turbines can have power ratings of above 10 MW and may have rotor blades that exceed 100 meters in length.

Wind turbine blades are typically made from a fibre-reinforced polymer material and comprise a pressure side shell half and a suction side shell half. The cross-sectional profile of a typical blade includes an airfoil for creating an air flow leading to a pressure difference between both sides. The resulting lift force generates torque for producing electricity. Wind turbine blades are usually manufactured by forming two shell parts or shell halves from layers of woven fabric or fibre and resin. Spar caps or main laminates are placed or integrated in the shell halves and may be combined with shear webs or spar beams to form structural support members. Spar caps or main laminates may be joined to, or integrated within, the inside of the suction and pressure halves of the shell.

As the size of wind turbine blades increases, various challenges arise from the blades being subjected to increased forces during operation, requiring improved reinforcing structures. In some known solutions, pultruded fibrous strips of material are used to manufacture spar caps. Pultrusion is a continuous process in which fibres are pulled through a supply of liquid resin and then heated in a chamber where the resin is cured. Such pultruded strips can be cut to any desired length. As such, the pultrusion process is typically characterized by a continuous process that produces composite parts having a constant cross-section. Thus, a plurality of pultrusions can be vacuum infused together in a mould to form the spar caps.

Typically, a spar cap in a wind turbine blade is made from either carbon pultrusions or glass pultrusions. Carbon fibres are typically lighter than glass fibres by volume, and have improved tensile and compressive strength. One of the challenges of wind turbine blade manufacturing is that a lightning protection system of the blade often requires that at least some blade components have a sufficiently high electrical conductivity through the thickness of the components, such as reinforcing sections like spar caps. There is thus an ongoing need for an improved pultruded spar cap and method for incorporating such spar cap in a wind turbine blade.

Also, an existing challenge of known pultrusion processes is to obtain a correct and consistent placement of the fibre material. Some of the known techniques make it difficult to control the fibre location and to maintain the correct distribution within the pultruded article. Preventing undesired sliding motion of the fibres relative to adjacent fibres tends to be difficult with such methods. Also, any resulting fibre misalignment is difficult to trace at component level after the manufacturing process.

It is therefore an object of the present invention to provide a wind turbine blade with an improved reinforcing structure, such as a spar cap, and to provide a method for manufacturing said reinforcing structure that allows for an improved control of the architecture of pultruded articles.

It is another object of the present invention to provide an optimized arrangement of materials used in the manufacture of a spar cap.

It is another object of the present invention to provide a reinforcing structure for a wind turbine blade which is a cost efficient structure and has optimized material characteristics for use in a lightning protection system of the blade.

It is another object of the present invention to provide a suitable reinforcing structure for a wind turbine blade which can be manufactured efficiently.

### Summary of the invention

It has been found that one or more of the aforementioned objects can be obtained by providing a method of manufacturing a wind turbine blade shell component (38), the method comprising the steps of
pultruding one or more carbon fibre preforms by passing a plurality of resin-impregnated tows of carbon fibre material through a first pultrusion die,
pultruding a plurality of pultrusion plates by passing a plurality of resin-impregnated tows of glass fibre material together with the one or more carbon fibre preforms through a second pultrusion die,
arranging the pultrusion plates on a blade shell material in a mould for the blade shell component, and
bonding the pultrusion plates with the blade shell material to form the blade shell component.

It was found that this method allows for a significantly improved control of the architecture of the pultrusion plate, in particular with respect to hybrid structures, enabling a correct positioning of the carbon fibre material and the glass fibre material. A fixed geometry of the carbon fibre material can be achieved by the first pultrusion step forming the carbon fibre preform. Also, as several tows of carbon fibre material are already joined and consolidated in the carbon fibre preform, the overall diameter of the carbon fibre article is increased, which prevents or reduces the occurrence of unwanted displacement of glass fibre tows in the subsequent step of pultruding the pultrusion plate. The result is an even and well-defined distribution of the carbon and glass fibre material in the hybrid pultrusion plate, which improves the efficiency of the lightning protection system of the wind turbine blade when using said pultrusion plates as part of the spar cap.

The method of the present invention and the build-up of the pultrusion plate are found to enhance the lightning protection properties and structural performance of the blade. In particular, it was found that the present solution reduces the risk for flaring over the pultrusion spar beam. Thus, structural and lightning protection performance can be enhanced at minimum material cost. Carbon fibres usually have high electrical conductivity and high stiffness per weight. These properties are desirable in the spar cap of a wind turbine blade. However, drawbacks of carbon fibres include the relatively low strain to failure and the comparatively high price per kg. Glass fibres are typically cheaper and have higher strain to failure. However, the electrical conductivity of glass fibres is minimal and stiffness per weight is significantly lower.

The wind turbine blade shell component manufactured by the method of the present invention typically is a shell half, such as a shell half with a reinforcing structure such as a spar cap. The blade shell material may include one or more fibre layers and/or a gelcoat. The plurality of pultrusion plates forming the spar cap will typically extend in a spanwise direction of the shell half or of the blade. Thus, at least some of the pultrusion plates have preferably a length corresponding to 60-95% of the blade length. A polymer resin is typically infused into pultrusion plates following the lay-up into the shell half.

In a first step a carbon fibre preforms is pultruded by passing a plurality of resin-impregnated tows of carbon fibre material through a first pultrusion die. Preferably, heat is applied to the carbon fibre material in the first pultrusion die. In some embodiments, the pultrusion string that is passed through the first pultrusion die is cured, optionally post-cured after exiting the first pultrusion die. In a preferred embodiment, the steps of pultruding one or more carbon fibre preforms and pultruding a plurality of pultrusion plates using the carbon fibre preforms are performed as an in-line process. In other embodiments, the step of pultruding one or more carbon fibre preforms is performed in a separate manufacturing line as the step of pultruding a plurality of pultrusion plates using the carbon fibre preforms. Thus, the carbon fibre preform may be wound on rolls or bobbins for later use, upon which they can be unwound and fed into the second pultrusion step together with the tows of glass fibre material.

In the step of pultruding a plurality of pultrusion plates by passing a plurality of resin-impregnated tows of glass fibre material together with the one or more carbon fibre preforms through a second pultrusion die, the carbon fibre preform may be impregnated with resin before entering the second pultrusion die, for example, by passing through are resin bath. Similarly, the tows of glass fibre material may pass through a resin bath to achieve impregnation prior to entering the second pultrusion die. Preferably, the second pultrusion die is a heated die.

The continuous pultrusion string exiting the second pultrusion die can be cut into individual pultrusion plates, for example having a length of between 30-200 meters, preferably 50-100 meters, preferably by using a cutter. The shaped impregnated plates are then preferably cured.

The carbon fibre preform is preferably a unidirectional pultruded profile. The step of pultruding one or more carbon fibre preforms may preferably include passing 3-100 tows, such as 3-50 tows, of resin-impregnated carbon fibre material through a first pultrusion die. In a preferred embodiment, each carbon fibre preform comprises 3-50 tows, preferably 3-20 tows, of carbon fibre material. The tows of carbon fibre material may be passed through a resin bath prior to being passed through the first pultrusion die.

The cavity of the first pultrusion die may have a rectangular cross section or a circular or oval cross section. In some embodiments, the cavity of the first pultrusion die comprises one or more portions having a substantially rectangular cross section and one or more portions having a substantially circular or oval cross section.

Accordingly, in a preferred embodiment, the carbon fibre preform comprises a portion having a circular cross section. The circular cross section may have a diameter of 0.5-4 mm, preferably 0.5-3 mm. In a preferred embodiment, the carbon fibre preform comprises a portion having a rectangular cross section. The rectangular cross section may have a height of 0.5-5 mm, preferably 0.5-3 mm. The height of the rectangular cross section typically extends in the thickness direction of the pultrusion plate. In a particularly preferred embodiment, the carbon fibre preform comprises a first portion with a substantially rectangular cross section and a second portion with a substantially circular cross section. The carbon fibre preform will usually have a substantially uniform cross section along its entire length.

In a preferred embodiment, the first pultrusion die has a substantially I-shaped cavity, for forming two opposing vertical flanges along the respective lateral edges of the carbon fibre perform, connected by a substantially horizontally portion extending in between the two opposing flanges. In some embodiments, the carbon fibre preform comprises a plurality of U-shaped or rectangular-shaped cavities or channels for receiving a plurality of tows of glass fibre material in the second pultrusion step, i.e. when forming the pultrusion plate. Such arrangement allows for improved geometry control and avoids/reduces the occurrence of fibre displacement or misalignment.

The step of pultruding a plurality of pultrusion plates by passing a plurality of resin-impregnated tows of glass fibre material together with the one or more carbon fibre preforms through a second pultrusion die preferably includes passing 3-100 tows of glass fibre material, such as 3-50 tows of glass fibre material through the second pultrusion die. It is particularly preferred that the second pultrusion die has a substantially rectangular die cavity.

The step of arranging the pultrusion plates on a blade shell material in a mould for the blade shell component preferably comprises arranging the pultrusion plates into adjacent stacks of pultrusion plates, wherein adjacent refers to a substantially chordwise direction. These stacks usually extend in a substantially spanwise direction of the shell half. The step of bonding the pultrusion plates with the blade shell material to form the blade shell component usually comprises a resin infusion step in which the pultrusion plates and the blade shell material are infused with a resin, for example in a VARTM process.

In a preferred embodiment, each pultrusion plate comprises a top surface, an opposing bottom surface and two lateral surfaces, wherein carbon fibre material is provided along the entire lateral surfaces of the pultrusion plate. Preferably, the carbon fibre preform is shaped such that it extends along both lateral edges of the pultrusion plate. It is particularly preferred that the carbon fibre preform provides one or more uninterrupted vertically extending paths of carbon fibre material extending from the top surface to the bottom surface of the pultrusion plate. This is particularly advantageous for a wellfunctioning lightning protection system including the spar cap of the present invention.

In a preferred embodiment, one or both of the pultrusion steps of the method of the present invention comprise passing the fibre material through guides, such as guide plates, and optionally through a resin bath prior to passing the fibre material through the pultrusion die. In some embodiments, the first and/or second pultrusion die comprises an impregnation chamber in the first part of the pultrusion die for impregnating the fibre material, preferably prior to entering the die cavity.

In a preferred embodiment, the first and/or second pultrusion die are heated. In a preferred embodiment, the fibre tows of carbon fibre material and the fibre tows of glass fibre material are drawn from fibre creels. In some embodiments, the fibre material is preheated before being passed through the first and/or second pultrusion die.

Preferably, the two pultrusion steps are carried out in-line, wherein, the second pultrusion die is located downstream the first pultrusion die. In a preferred embodiment, a continuous mechanism pulls the respective pultrusion strings through the die, and the pultrusion string exiting the second pultrusion die is cut into desired lengths. In other embodiments, the carbon fibre preform is manufactured separately, and optionally wound or coiled, for subsequent use in the final pultrusion of the pultrusion plate.

In a preferred embodiment, the lateral surfaces of each pultrusion plate are free from glass fibres, preferably by providing a continuous path of carbon fibre material along the lateral edges of the pultrusion plate, the continuous path of carbon fibre material extending from the top surface to the opposing bottom surface of the pultrusion plate, and wherein the continuous path of carbon fibre material provides an electrically conducting path throughout the vertical direction of the pultrusion plate.

In a preferred embodiment, the pultrusion plates are arranged into adjacent stacks of pultrusion plates, wherein a continuous path of carbon fibre material extends from the top surface of the uppermost pultrusion plate to the bottom surface of the lowermost pultrusion plate of each stack of pultrusion plates.

In some embodiments, the glass fibre material of the pultrusion plate surrounds at least part of the carbon fibre preform. In other embodiments, the glass fibre material of the pultrusion plate is surrounded by the carbon fibre preform along the lateral surfaces and optionally along the top and bottom surfaces of the pultrusion plate. In some embodiments, the carbon fibre preform is substantially slab-shaped. In some embodiments, the carbon fibre preform is substantially I-shaped as seen in a cross section, with a first flange portion, an opposing second flange portion and an intermediate body portion of substantially rectangular cross section connecting the first flange portion with the second flange portion. In some embodiments, the carbon fibre preform has the shape of a rectangular cuboid.

In a preferred embodiment, the ratio of carbon fibre material to glass fibre material in the pultrusion plate is between 1/5 to 1/1, preferably 1/4 to 1/1. This was found to provide optimised properties of the pultrusion plate in terms of electrical conductivity and overall stiffness. In some embodiments, a conductive material, such as a carbon biax layer, a carbon veil or a glass/carbon hybrid fabric or a glass/carbon hybrid veil, is used to electrically connect the pultrusion plates transversely within a stack of adjacent pultrusion plates. This can be implemented as an interlayer between pultrusion plates or only as the first and/or last layer in the stack of pultrusion plates.

The terms tows and rovings are used interchangeably herein. In some embodiments, each tow comprises a plurality of carbon filaments or glass filaments, wherein each filament comprises an outer layer of sizing. In a preferred embodiment, each tow comprises 10,000 to 100,000 filaments, preferably 20,000 to 60,000 filaments, of fibre. In addition, each pultrusion plate preferably comprises a resin or binding agent which is used in the pultrusion process for joining the carbon fibre material and the glass fibre material into a single pultrusion string. Preferably, each pultrusion plate comprises a matrix of fibre tows arranged in columns and rows, as seen in a vertical cross section of the plate. Thus, pultrusion fibre material may comprise glass fibres, carbon fibres, a resin or binding agent, and optionally additional reinforcing material. Typically, the pultrusion plate has a constant cross-section along its length.

In a preferred embodiment, carbon fibre material is provided along the entire lateral surfaces of the pultrusion plate, that is, from the top surface to the bottom surface. It is particularly preferred that the lateral surfaces of the pultrusion plate are free from glass fibre material. Thus, it is preferred that the carbon fibre preform comprises two opposing lateral flanges, each extending along the respective entire lateral edge of the pultrusion plate.

In a preferred embodiment, the carbon fibre preform comprises at least one horizontally extending portion and at least one, preferably at least two, vertically extending portions, wherein the vertically extending portion extends continuously between the top surface and the bottom surface of the pultrusion plate. It is particularly preferred that the carbon fibre preform comprises a horizontally extending portion and a first and second vertically extending portion located at opposing ends of the horizontally extending portion, wherein the vertically extending portions each extend continuously between the top surface and the bottom surface of the pultrusion plate. This configuration is found to provide an advantageous electrical conductivity.

Each stack of pultrusion plates may comprise 2-30, such as 5-20 pultrusion plates successively arranged on top of each other. Thus, each stack will usually extend in a spanwise direction of the blade. In a midsection between a root end and a tip end, each stack may comprise 8-15 layers of pultrusion plates, whereas towards the root end and towards the tip end the number of layered pultrusion plates may decrease to 1-3. Thus, the stack of pultrusion plates is preferably tapered towards both the root end and the distal end. Such configuration advantageously allows for a profile that is consistent with the thickness profile of the shell. Typically, two or more, or three or more stacks of pultrusion plates are arranged next to each other, adjacent to each other in a substantially chordwise direction. Typically, a resin will be infused in the stack of pultrusion plates. This can, for example, be done using vacuum-assisted resin transfer moulding.

In a preferred embodiment, the tows of glass fibre material extend substantially parallel to each other within the pultrusion plate. In a preferred embodiment, the tows of glass fibre material are arranged in an array, preferably a regular array, of rows and columns of tows, as seen in a vertical cross section of the pultrusion plate. The rows will typically extend in a substantially horizontal or chordwise direction, whereas the columns will typically extend in a substantially vertical or flapwise direction. The array of rows and columns of tows will typically be constant over the length of the pultrusion plate.

In a preferred embodiment, the tows of glass fibre material are arranged in a plurality of rows of tows, and optionally a plurality of columns of tows, as seen in a vertical cross section of the pultrusion plate.

In a preferred embodiment, the lateral surfaces of each pultrusion plate are free from glass fibres, preferably by providing a continuous path of carbon fibre material along the lateral edges of the pultrusion plate, the continuous path of carbon fibre material being provided by the carbon fibre preform and extending from the top surface to the opposing bottom surface of the pultrusion plate. In some embodiments, the carbon fibre material extends from each lateral surface of the plate inward over a chordwise or horizontal distance of 2-25 mm, preferably 2-12 mm. In some embodiments, said chordwise or horizontal distance is longer, e.g. 8-12 mm at the top and bottom surfaces of the pultrusion plate, and shorter towards the midpoint of each lateral surface, such as 1-4 mm.

In a preferred embodiment, the tows of glass fibre material and the carbon fibre preform form a non-random pattern in the pultrusion plate, preferably a symmetrical pattern, as seen in a vertical cross section of the pultrusion plate. Typically, the pattern is constant over the length of the pultrusion plate. In another preferred embodiment, the pattern comprises one more vertical columns of carbon fibre material extending from the top surface to the bottom surface of the pultrusion plate, as seen in a vertical cross section of the pultrusion plate. It is preferred that the pattern has reflectional symmetry or bilateral symmetry as appearing on the vertical cross section of the pultrusion plate, such that the left and right sides are mirror images of each other.

In a preferred embodiment, the pultrusion plates are arranged into adjacent stacks of pultrusion plates, and wherein a continuous path of carbon fibre material extends from the top surface of the uppermost pultrusion plate to the bottom surface of the lowermost pultrusion plate of each stack of pultrusion plates. Said continuous path of carbon fibre material within the stack is preferably an electrically conducting path. Thus, the entire stack may conduct a lightning current from the top surface of the stack to the bottom surface of the stack, preferably in a substantially vertical or flapwise direction.

It is particularly preferred that the pultrusion plates, and the reinforcing structure comprising the pultrusion plates, do not comprise any isolated tows of carbon fibre material, such as tows of carbon fibre material that are not electrically coupled to another tow of carbon fibre material. Thus, in a particularly preferred embodiment, all carbon fibre material within the pultrusion plate is electrically coupled, i.e. providing a conduction path for electrical energy, such as a lightning current, between the carbon fibre material. This is found to effectively prevent flashovers inside the spar cap when the blade is hit by a lightning strike, thus preventing damage to the pultrusion plate and to the reinforcing structure, such as the spar cap.

In some embodiments, the stacked pultrusion plates are pre-bonded together prior to being bonded to the blade shell. Alternatively, the stacked pultrusion plates are cobonded with the blade shell materials. In a preferred embodiment, the stacked pultrusion plates are bonded with the blade shell material using an adhesive or in a vacuum assisted resin transfer moulding (VARTM) process.

Usually, the top and bottom surfaces face opposing flapwise directions, whereas the lateral surface typically face towards the trailing edge and towards the leading edge of the blade half, respectively. The present inventors have found that an efficient lightning protection system benefits from the conductive carbon fibre materials being connected electrically and/or physically throughout the reinforcing structure, in particular in the vertical or flapwise direction, along the lateral edges of the stacked pultrusion plates, to ensure that flashovers do not occur inside the spar cap when the blade is hit by a lightning strike. Thus, it is advantageous that the electrical conductivity through the thickness of the pultrusion plates is relatively high. Thus, the continuous path of carbon fibre material extending from the top surface to the opposing bottom surface of the pultrusion plate may advantageously provide an electrically conducting path, in particular for lightning strikes, throughout the vertical direction of the pultrusion plate. In a preferred embodiment, the continuous path of carbon fibre material extends substantially vertically within the pultrusion plate.

In a preferred embodiment, the carbon fibre preform comprises adjoining tows of carbon fibre material. Adjoining tows of carbon fibre material means adjacent tows of carbon fibre material that are spaced apart by a distance not more than 100 µm, such as not more than 50 µm, preferably not more 30 µm, such as not more than 20 µm, preferably not more than 10 µm. Such maximum distances are found to provide a sufficiently electrically conductive path between adjoining tows of carbon fibre material.

In a particularly preferred embodiment, the distance between adjoining tows of carbon fibre material is less than 100 µm, preferably less than 50 µm, more preferably less than 20 µm, most preferably less than 10 µm. In some embodiments, the distance between adjoining tows of carbon fibre material is zero.

In a preferred embodiment, adjoining tows of carbon fibre material are provided along the top surface of each pultrusion plate as part of the carbon fibre preform. In another preferred embodiment, adjoining tows of carbon fibre material are provided along the bottom surface of each pultrusion plate as part of the carbon fibre preform. The adjoining tows of carbon fibre material of the carbon fibre preform may extend from the top and from the bottom surface, respectively, inward along a vertical distance of 1-3 mm, such as 1.5-2.0 mm.

In a preferred embodiment, several adjacent columns of adjoining tows of carbon fibre material are provided along the entire lateral surfaces of the pultrusion plate as part of the carbon fibre preform.

In a preferred embodiment, a continuous, preferably substantially horizontal, row of adjoining tows of carbon fibre material as part of the carbon fibre preform extends between the lateral surfaces of the blade, said continuous row being spaced apart from the top surface and from the bottom surface of the pultrusion plate.

In another aspect, the present invention relates to a pultrusion plate comprising a pultruded carbon fibre preform and a plurality of tows of glass fibre material, wherein the pultrusion plate is obtainable by a method of the present invention. The pultrusion plate obtainable by the method of the present invention has an improved structure in that the correct distribution and alignment of glass fibre material and carbon fibre material is enhanced. Using the carbon fibre preform in the manufacturing process provides several tows of carbon fibre material which are already joined and consolidated in the carbon fibre preform, thus increasing the diameter of the carbon fibre article. This ensures are more even and well-defined distribution of the carbon and glass fibre material in the hybrid pultrusion plate as compared to known products.

In a preferred embodiment, the pultrusion plate comprises a top surface, an opposing bottom surface and two lateral surfaces, wherein carbon fibre material is provided along the entire lateral surfaces of the pultrusion plate. The top and bottom surfaces of the pultrusion plate may be covered by peel ply. In a preferred embodiment, the pultrusion plates have a length corresponding to an entire length of a spar cap for a wind turbine blade shell. In a preferred embodiment, the pultrusion plates can be bonded with the blade shell material in a resin infusion process.

Preferably, the carbon fibre material of the pultruded carbon fibre preform comprises a plurality of tows of carbon fibre material, wherein adjoining tows of carbon fibre material of the preform are provided along the entire lateral surfaces of the pultrusion plate. In a preferred embodiment, the tows of carbon fibre material of the preform are arranged in a plurality of rows of tows, and optionally a plurality of columns of tows, as seen in a vertical cross section of the pultrusion plate.

In a preferred embodiment, the lateral surfaces of the pultrusion plate are free from glass fibres, preferably by providing a continuous path of adjoining tows of carbon fibre material of the preform along the lateral edges of the pultrusion plate, the continuous path of adjoining tows of carbon fibre material extending from the top surface to the opposing bottom surface of the pultrusion plate.

In a preferred embodiment, the glass fibre material and the carbon fibre material of the pultrusion plate form a non-random pattern, preferably a symmetrical pattern, as seen in a vertical cross section of the pultrusion plate.

In another aspect, the present invention relates to a reinforcing structure for a wind turbine blade, the reinforcing structure comprising a plurality of pultrusion plates according to the present invention. The reinforcing structure will typically be a spar cap or a main laminate. In some embodiments, the reinforcing structure comprises a box spar. In other embodiments, the reinforcing structure comprises a spar beam. In a preferred embodiment, the elongate reinforcing structure is a spar structure, such as a spar cap, a spar beam or a box spar. It is preferred that the reinforcing structure extends along the blade in a spanwise direction. Typically, the reinforcing structure will extend over 60-95% of the blade length. The wind turbine blade is usually manufactured from two shell halves, a pressure side shell half and a suction side shell half. Preferably, both shell halves comprise an elongate reinforcing structure, such as a spar cap or a main laminate, according to the present invention.

In another aspect, the present invention relates to a wind turbine blade shell component, such as a shell half comprising a spar cap, comprising a plurality of pultrusion plates according to the present invention.

In another aspect, the present invention relates to a lightning protection system for a wind turbine blade, the lightning protection system comprising a lightning conductor disposed at least partially in the interior of the blade, one or more electrically conducting lightning receptors disposed on one or more of the surfaces of the blade, wherein the one or more electrically conducting lightning receptors are electrically connected to a spar cap, wherein the spar cap comprises a plurality of pultrusion plates according to the present invention, or to a reinforcing structure, such as a spar cap, of the present invention. In another aspect, the present invention relates to a wind turbine blade comprising a lightning protection system as described above, i.e. the lightning protection system comprising a lightning conductor, such as a cable, for example a copper cable, disposed at least partially in the interior of the blade, one or more electrically conducting lightning receptors disposed on one or more of the surfaces of the blade, wherein the one or more electrically conducting lightning receptors are electrically connected to a plurality of pultrusion plates according to the present invention, or to a reinforcing structure, such as a spar cap, of the present invention.

The shell halves will typically be produced by infusing a fibre lay-up of fibre material with a resin such as epoxy, polyester or vinyl ester. Usually, the pressure side shell half and the suction side shell half are manufactured using a blade mould. Each of the shell halves may comprise spar caps or main laminates provided along the respective pressure and suction side shell members as reinforcing structures. The spar caps or main laminates may be affixed to the inner faces of the shell halves.

The spar structure is preferably a longitudinally extending load carrying structure, preferably comprising a beam or spar box for connecting and stabilizing the shell halves. The spar structure may be adapted to carry a substantial part of the load on the blade. In some embodiments, the reinforcing structure is arranged within the pressure side shell half. In other embodiments, the reinforcing structure is arranged within the suction side shell half.

In a preferred embodiment, the pressure side shell half and the suction side shell half of the blade are manufactured in respective mould halves, preferably by vacuum assisted resin transfer moulding. According to some embodiments, the pressure side shell half and the suction side shell half each have a longitudinal extent L of 50-110 m, preferably 60-90 m.

According to some embodiments, the method further comprises a step of arranging one or more shear webs in at least one of the shell halves, usually at the location of the reinforcing structure. Each shear web may comprise a web body, a first web foot flange at a first end of the web body, and a second web foot flange at a second end of the web body. In some embodiments, the shear webs are substantially I-shaped. Alternatively, the shear webs may be substantially C-shaped.

In one aspect, the present invention relates to a wind turbine blade shell component, such as shell half, obtainable by the method of the present invention. The present invention also relates to a wind turbine blade having a pressure side shell and a suction side shell, wherein the suction and pressure side shells are joined along a leading and trailing edge of the blade. One or both of the suction and pressure side shell components further include a reinforcing structure, such as a spar cap bonded to an interior surface of the shell, wherein the spar cap includes a plurality of pultrusion plates according to the present invention. The pultrusion plates preferably have a continuous unbroken length along an entire length of the spar cap.

In a preferred embodiment, the pultrusion plate has a rectangular cross section. In a preferred embodiment, the pultrusion plate has the shape of a rectangular cuboid. The pultrusion plate has a length, which typically extend in a substantially spanwise direction when the pultrusion plate is arranged in the blade shell. The pultrusion plate also has a width, which typically extends in a substantially chordwise direction when the pultrusion plate is arranged in the blade shell. The pultrusion plate also has a height or thickness, which typically extends in a substantially flapwise direction when the pultrusion plate is arranged in the blade shell. The thickness of the pultrusion plate is preferably between 3 and 10 mm, more preferably between 4 and 7 mm. The length of the plate is typically its largest dimension. The length of the plate extends in the same direction as its longitudinal axis.

The length of the pultrusion plate is typically between 50 and 150 meters, preferably between 50 and 100 meters, more preferably between 70 and 100 meters. The height/thickness of the pultrusion plate is preferably between 2 and 10 millimeters, preferably between 3 and 7 millimeters, most preferably between 4 and 6 millimeters. The width of the plate is preferably between 20 and 300 millimeters, most preferably between 80 and 150 millimeters. In a preferred embodiment, the reinforcing structure, such as the spar cap, comprises between 1 and 15 stacks of pultrusion plates arranged next to each other, more preferably between 3 and 9 stacks. Each stack may comprise up to 20 pultrusion plates arranged on top of each other, such as 2-20 pultrusion plates or 2-10 pultrusion plates. Thus, each reinforcing section, such as each spar cap, may comprise 10 to 200 pultrusion plates.

The pultrusion fibre material preferably comprises a plurality of tows or rovings of carbon fibre material, formed into a pultruded carbon fibre preform, and a plurality of tows or rovings of glass fibre material. Thus, each pultrusion plate may comprise 20-200 tows of fibre material in total. The tows will usually extend in the length direction of the pultrusion plate, i.e. substantially parallel to its longitudinal axis, or parallel to the spanwise direction when arranged in the blade shell. In a preferred embodiment, the tows of fibre material are arranged in a regular array or regular grid of rows and columns of tows, as seen in a vertical cross section of the pultrusion plate. The pultrusion plate preferably comprises at least 10 rows and at least 10 columns of tows.

All features and embodiments discussed above with respect to the method of manufacturing a wind turbine blade shell component likewise apply to the pultrusion plate or to the reinforcing structure of the present invention and vice versa.

In another aspect, the present invention relates to a wind turbine blade or to a wind turbine blade component comprising a reinforcing structure according to the present invention, or to a wind turbine blade shell component obtainable by the afore-mentioned method of manufacturing a wind turbine blade shell component. In another aspect, the present invention relates to a wind turbine blade shell component comprising a plurality of pultrusion plates according to the present invention.

In another aspect, the present invention relates to a pultrusion process for manufacturing the pultrusion plate of the present invention, and to a pultrusion plate obtainable by said pultrusion process. Said pultrusion process preferably comprises the provision of a plurality of bobbins carrying respective tows of carbon fibre material and tows of glass fibre material. In a first step one or more carbon fibre preforms are pultruded by passing a plurality of resin-impregnated tows of carbon fibre material through a first pultrusion die. The tows of carbon fibre material are preferably pulled through guide plates, a resin bath, and the heated first pultrusion die by a pulling mechanism. In a second step, a plurality of pultrusion plates are pultruded by passing a plurality of resin-impregnated tows of glass fibre material together with the one or more carbon fibre preforms through a second pultrusion die. The continuous pultrusion string exiting the second pultrusion die can be cut into individual pultrusion plates with a length of between 30-200 meters, preferably 50-100 meters, by a cutter. The shaped impregnated plates are then advantageously cured. The guide plates and/or the pultrusion dies may take the form of a spreader or inlet comprising multiple apertures. The apertures can be spaced and they can be located so as to guide the fibre to form a desired pattern of fibre material in the pultrusion plates.

As used herein, the term "vertical cross section of the pultrusion plate" refers to a cross section of the pultrusion plate on a plane perpendicular to its longitudinal axis, i.e. the axis along the length direction of the pultrusion plate, which is usually the direction in which the pultrusion plate has its greatest extension. When arranged in the blade shell, the longitudinal axis or the length extension of the pultrusion plate will usually coincide substantially with a spanwise direction of the blade.

As used herein, the term "spanwise" is used to describe the orientation of a measurement or element along the blade from its root end to its tip end. In some embodiments, spanwise is the direction along the longitudinal axis and longitudinal extent of the wind turbine blade.

As used herein, the term "horizontal" refers to a direction that is substantially parallel to the chord of the blade when the pultrusion plates are arranged in the blade shell. The vertical direction is substantially perpendicular to the horizontal direction, extending in a substantially flapwise direction of the blade.

### Description of the invention

The invention is explained in detail below with reference to an embodiment shown in the drawings, in which
Fig. 1 shows a wind turbine,
Fig. 2 shows a schematic view of a wind turbine blade,
Fig. 3 shows a schematic view of a cross-section of a wind turbine blade,
Fig. 4 is a schematic top view of a shell half of a wind turbine blade according to the present invention,
Fig. 5 is a schematic vertical cross section through part of a shell half with a reinforcing structure of the present invention,
Fig. 6 illustrates a known pultrusion process,
Figs. 7a-7f is a schematic vertical cross-sectional view of different embodiments of a hybrid pultrusion plate,
Fig. 8 is a vertical cross-sectional view of a reinforcing structure comprising the hybrid pultrusion plates,
Fig. 9 is a schematic vertical cross-sectional view of a hybrid pultrusion plate,
Fig. 10 is a schematic illustration of a lightning protection system of the present invention,
Fig. 11 is a schematic vertical cross-sectional view ofa hybrid pultrusion plate, illustrating a possible fibre misalignment,
Fig. 12 is a schematic illustration of a pultrusion process of the present invention,
Fig. 13 is a schematic vertical cross-sectional view of a pultrusion plate of the present invention,
Fig. 14 is a schematic vertical cross-sectional view of a pultrusion plate according to another embodiment of the present invention, and
Fig. 15 is a perspective view of a pultrusion plate according to the present invention.

### Detailed description of the figures

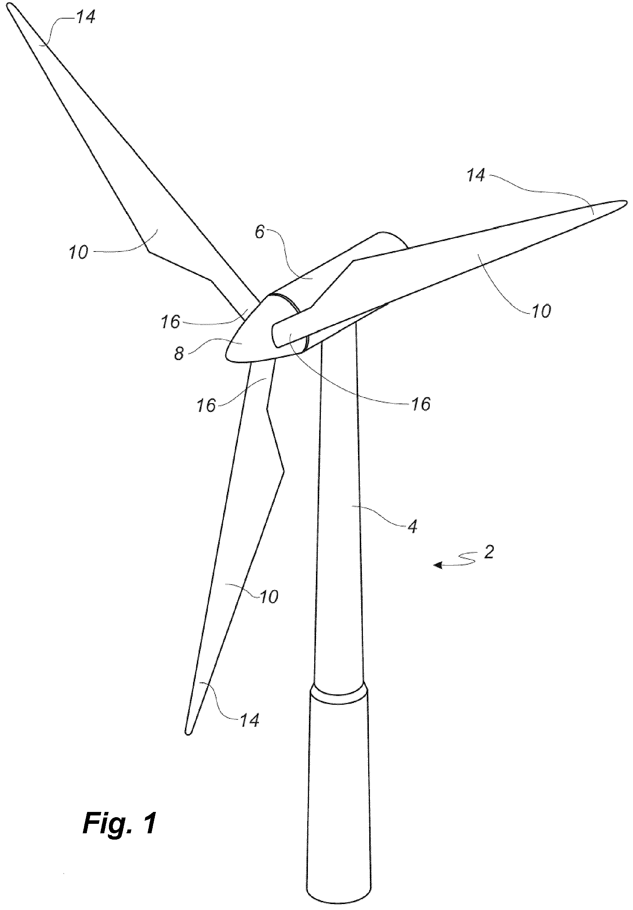

Fig. 1 illustrates a conventional modern upwind wind turbine according to the so-called "Danish concept" with a tower 4, a nacelle 6 and a rotor with a substantially horizontal rotor shaft. The rotor includes a hub 8 and three blades 10 extending radially from the hub 8, each having a blade root 16 nearest the hub and a blade tip 14 farthest from the hub 8. The rotor has a radius denoted R.

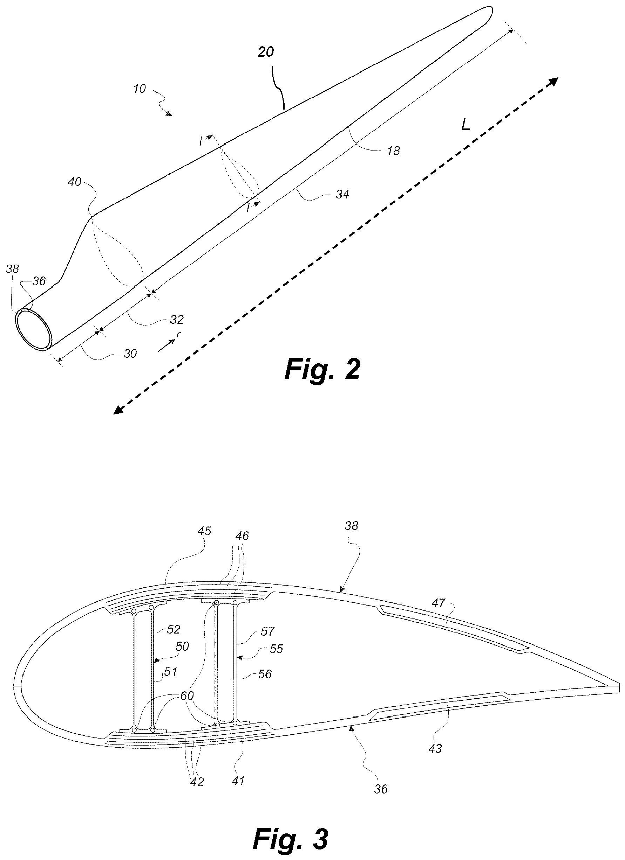

Fig. 2 shows a schematic view of a wind turbine blade 10. The wind turbine blade 10 has the shape of a conventional wind turbine blade and comprises a root region 30 closest to the hub, a profiled or an airfoil region 34 farthest away from the hub and a transition region 32 between the root region 30 and the airfoil region 34. The blade 10 comprises a leading edge 18 facing the direction of rotation of the blade 10, when the blade is mounted on the hub, and a trailing edge 20 facing the opposite direction of the leading edge 18.

The airfoil region 34 (also called the profiled region) has an ideal or almost ideal blade shape with respect to generating lift, whereas the root region 30 due to structural considerations has a substantially circular or elliptical cross-section, which for instance makes it easier and safer to mount the blade 10 to the hub. The diameter (or the chord) of the root region 30 may be constant along the entire root area 30. The transition region 32 has a transitional profile gradually changing from the circular or elliptical shape of the root region 30 to the airfoil profile of the airfoil region 34. The chord length of the transition region 32 typically increases with increasing distance rfrom the hub. The airfoil region 34 has an airfoil profile with a chord extending between the leading edge 18 and the trailing edge 20 of the blade 10. The width of the chord decreases with increasing distance rfrom the hub.

A shoulder 40 of the blade 10 is defined as the position, where the blade 10 has its largest chord length. The shoulder 40 is typically provided at the boundary between the transition region 32 and the airfoil region 34. Fig. 2 also illustrates the longitudinal extent L, length or longitudinal axis of the blade.

It should be noted that the chords of different sections of the blade normally do not lie in a common plane, since the blade may be twisted and/or curved (i.e. pre-bent), thus providing the chord plane with a correspondingly twisted and/or curved course, this being most often the case in order to compensate for the local velocity of the blade being dependent on the radius from the hub.

The blade is typically made from a pressure side shell part 36 and a suction side shell part 38 that are glued to each other along bond lines at the leading edge 18 and the trailing edge of the blade 20.

Fig. 3 shows a schematic view of a cross section of the blade along the line I-I shown in Fig. 2. As previously mentioned, the blade 10 comprises a pressure side shell part 36 and a suction side shell part 38. The pressure side shell part 36 comprises a spar cap 41, also called a main laminate, which constitutes a load bearing part of the pressure side shell part 36. The spar cap 41 comprises a plurality of fibre layers 42 mainly comprising unidirectional fibres aligned along the longitudinal direction of the blade in order to provide stiffness to the blade. The suction side shell part 38 also comprises a spar cap 45 comprising a plurality of fibre layers 46. The pressure side shell part 36 may also comprise a sandwich core material 43 typically made of balsawood or foamed polymer and sandwiched between a number of fibre-reinforced skin layers. The sandwich core material 43 is used to provide stiffness to the shell in order to ensure that the shell substantially maintains its aerodynamic profile during rotation of the blade. Similarly, the suction side shell part 38 may also comprise a sandwich core material 47.

The spar cap 41 of the pressure side shell part 36 and the spar cap 45 of the suction side shell part 38 are connected via a first shear web 50 and a second shear web 55. The shear webs 50, 55 are in the shown embodiment shaped as substantially I-shaped webs. The first shear web 50 comprises a shear web body and two web foot flanges.

The shear web body comprises a sandwich core material 51, such as balsawood or foamed polymer, covered by a number of skin layers 52 made of a number of fibre layers. The blade shells 36, 38 may comprise further fibre-reinforcement at the leading edge and the trailing edge. Typically, the shell parts 36, 38 are bonded to each other via glue flanges.

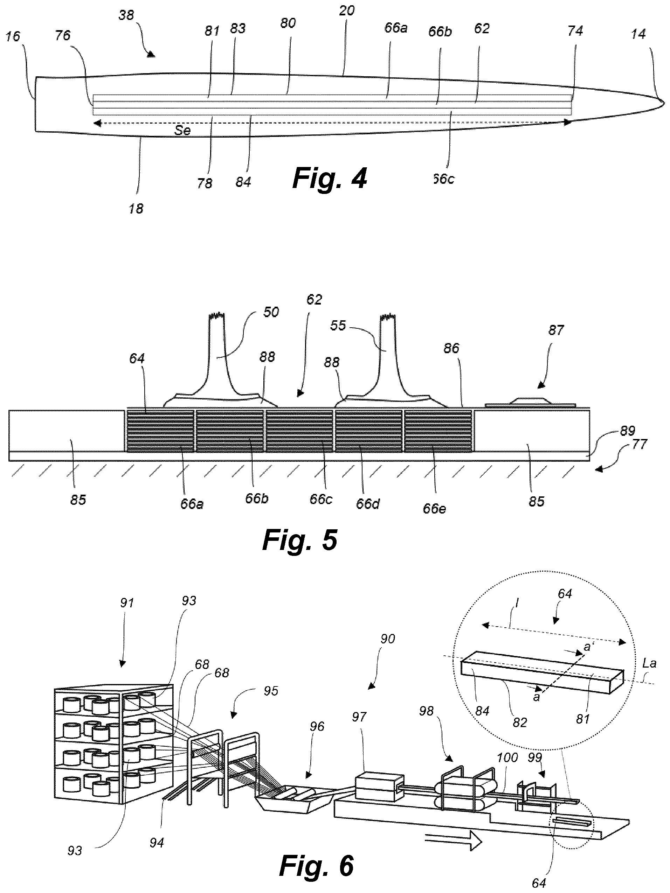

Fig. 4 is a schematic top view of a shell half 38 of a wind turbine blade according to the present invention, illustrating the location of a reinforcing structure 62 having a spanwise extent Se. In the illustrated embodiment, the reinforcing structure 62 comprises three adjacent stacks 66a, 66b, 66c of pultrusion plates. As seen in Fig. 4, the elongate reinforcing structure 62 extends in a substantially spanwise direction of the blade, with adjacent stacks 66a, 66b, 66c of pultrusion plates. The elongate reinforcing structure 62 has a tip end 74, closest to the tip end of the blade, and a root end 76, closest to the root end of the blade. The elongate reinforcing structure also comprises a spanwise extending front edge 78, which is closest to the leading edge 18 of the blade, and a spanwise extending rear edge 80, which is closest to the trailing edge 20 of the blade.

Fig. 5 is a schematic vertical cross section through part of a shell half with a reinforcing structure 62 of the present invention, as seen from the root end of the blade. The reinforcing structure 62, such as a spar cap, comprises a plurality of pultrusion plates 64 according to the present invention, arranged in adjacent stacks 66a-e, which are arranged on blade shell material 89 in mould 77 for the blade shell component, such as a shell half. The stacked pultrusion plates 64 are then bonded with the blade shell material 89 to form the blade shell component, such as the shell half with the spar cap. Core material 85 is arranged on either chordwise side of the reinforcing structure 62. A first shear web 50 and a second shear web 55 is placed on the spar cap 62 via respective bond lines 88. The stacks 66a-e may be covered by a carbon biax layer 86 or a carbon veil or a glass/carbon hybrid fabric or a glass/carbon hybrid veil extending towards current connection terminal 87 of a lightning protection system.

Fig. 6 illustrates a known pultrusion process which relies on a pultrusion system 90 comprising a portion for receiving a plurality of bobbins 93 each supply a tow of fibre material 68 from a creel 91. A reinforcement material 94 can be provided as well.

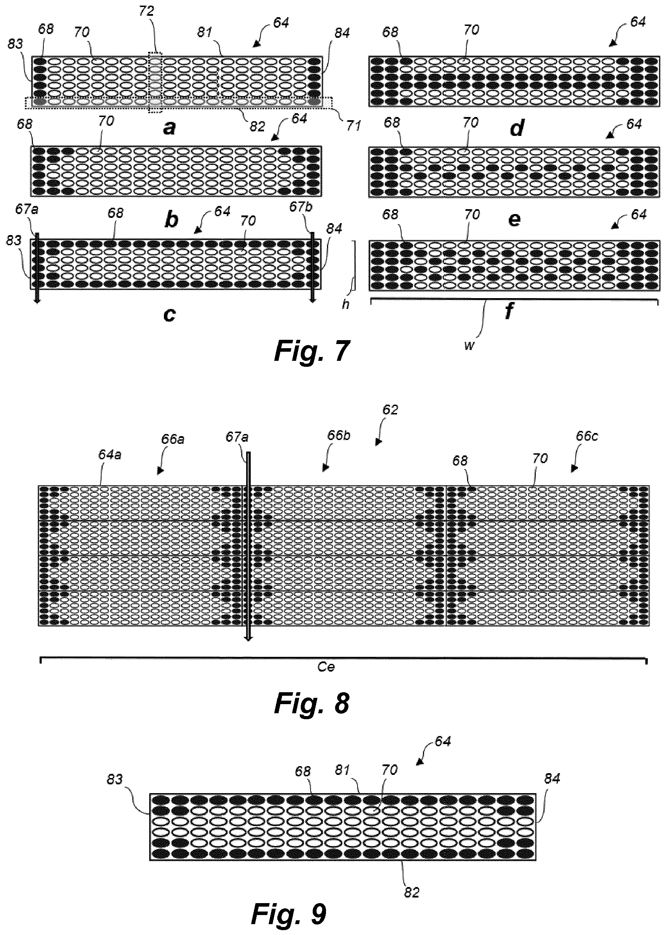

The tows 68 are pulled through guide plates 95, resin bath 96, and heated die 97 by pulling mechanism 98. The pultrusion string 100 is cut into individual pultrusion plates 64 by cutter 99. The shaped impregnated fibres are cured and can optionally be wound onto a roll. The guide plates and/or the die may take the form of a spreader or inlet comprising multiple apertures, each aperture receiving a respective carbon fibre tow or glass fibre two. The apertures can be spaced and they are located so as to guide the fibre tows, for example to form a desired pattern. The enlarged view of the pultrusion plate 64 in Fig. 6 also illustrates its longitudinal axis La and its length I. The height/thickness h and width w of the pultrusion plate are illustrated in Fig. 8, see plate 64f.

Various patterns of a hybrid pultrusion plate are illustrated in Fig. 7. Each pultrusion plate 64 in the various embodiments illustrated in Figs. 7a-f comprises a plurality of tows of glass fibre material 70, indicated as white elliptical shapes, and a plurality of tows of carbon fibre material 68, indicated as black elliptical shapes. As illustrated in Fig. 7a, the tows of glass fibre material 70 and the tows of carbon fibre material 68 are arranged in an array of rows 71 and columns 72 of tows, as seen in a vertical cross section of the pultrusion plate.

As illustrated in Fig. 7a, each pultrusion plate comprises a top surface 81, an opposing bottom surface 82 and two lateral surfaces 83, 84, wherein adjoining tows of carbon fibre material are provided along the lateral surfaces 83, 84. This provides respective continuous paths 67a, 67b of adjoining tows of carbon fibre material extending from the top surface 81 to the opposing bottom surface 82 of the pultrusion plate 64 along the lateral surfaces.

As seen in the various embodiments of Fig. 7, the plurality of tows of glass fibre material 70 and the plurality of tows of carbon fibre material 68 form a non-random pattern, preferably a symmetrical pattern, as seen in a vertical cross section of the pultrusion plate 64. Fig. 7a shows an embodiment where adjoining tows of carbon fibre material are only provided along the lateral surfaces 83, 84. In Fig. 7b, the carbon tows additionally extend along part of the upper and lower surfaces 81, 82, to some extent from the lateral surfaces 83, 84 towards the centre. In the embodiment of Fig. 7c, the carbon tows additionally extend along the upper and lower surfaces 81, 82 across the entire width of the pultrusion plate. The embodiment illustrated in Fig. 7d comprises several rows of adjoining carbon tows 68 along the lateral surfaces, as well as a continuous line of carbon tows extending between the lateral edges within the pultrusion plate. A similar configuration is shown in Fig. 7e, wherein the centre line is somewhat more scattered. Finally, Fig. 7f illustrates an embodiment in which several rows of adjoining carbon tows 68 are provided along the lateral surfaces, and in addition a checkerboard pattern is provided in a centre region of the pultrusion plate 64.

Fig. 8 is a schematic vertical cross-sectional view of a reinforcing structure 62 such as a spar cap comprising three chordwise adjacent stacks 66a-c of four pultrusion plates 64 per stack. Several continuous paths of adjoining tows of carbon fibre material extend from the top surface of the reinforcing structure 62 to its bottom surface as illustrated at 67a by way of the adjoining carbon tows provided at the lateral edges of the individual plates 64. The chordwise extent Ce of the reinforcing structure 62 is also illustrated in Fig. 8.

Fig. 9 is a cross sectional view of another embodiment of a pultrusion plate 64. Here, adjoining tows of carbon fibre material 68 are provided along the top surface 81 and the bottom surface 82 of the pultrusion plate, whereas the lateral edges 83, 84 comprise both carbon fibre tows and glass fibre tows. Thus, a conductive path of adjoining carbon fibre tows is provided in a horizontal direction.

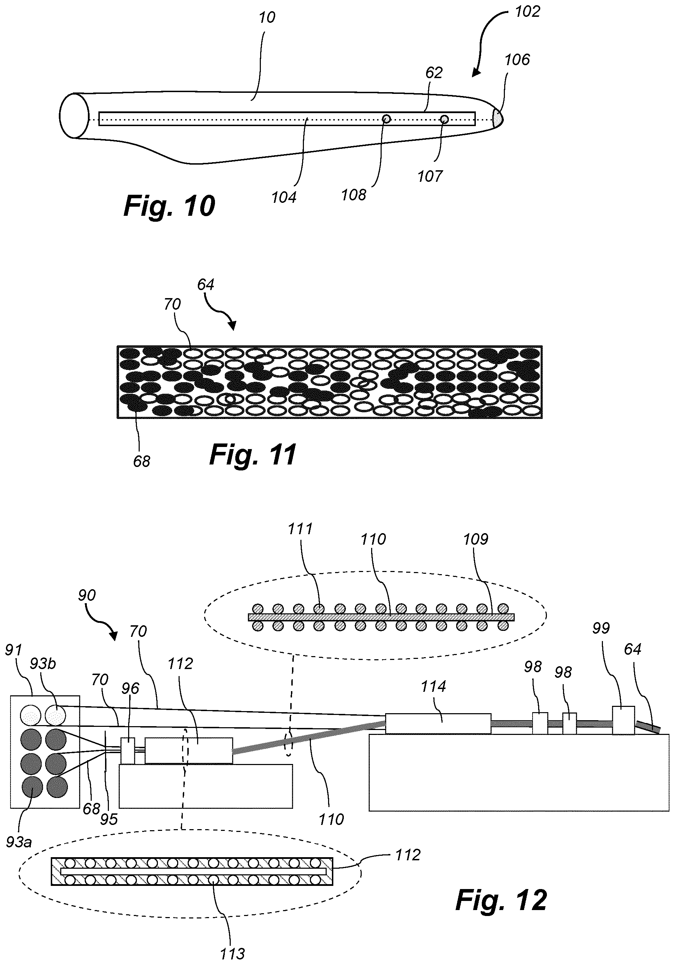

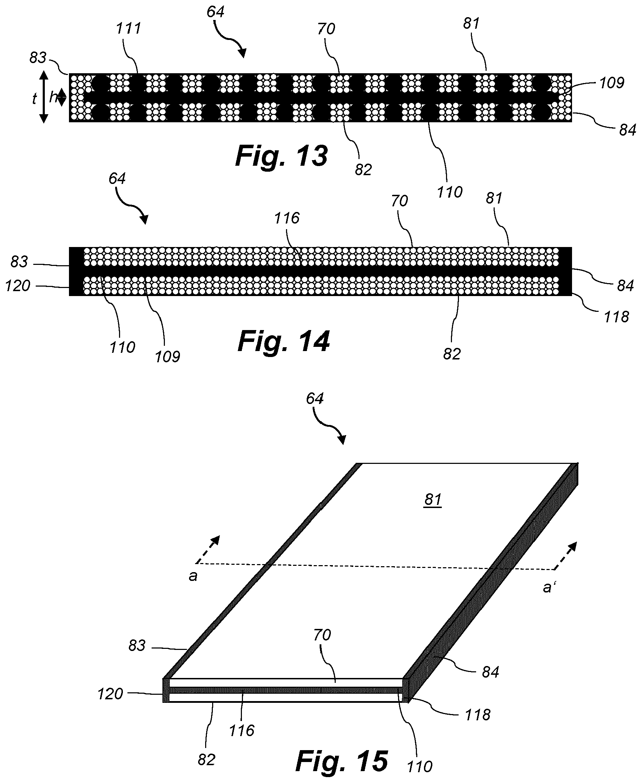

Fig. 10 is a schematic illustration of a lightning protection system of the present invention. The lightning protection system 102 comprises a lightning conductor 104, preferably a down conductor, disposed at least partially in the interior of the blade 10. A tip lightning receptor 106 and two side lightning receptors 107, 108 are disposed on or in one or more of the outer surfaces of the blade 10, wherein the electrically conducting lightning receptors 106, 107, 108 are electrically connected to a spar cap 62 of the present invention. The spar cap 62 may advantageously comprise a plurality of pultrusion plates according to the invention, for example, as illustrated in Figs. 13-15.

Fig. 11 is a schematic vertical cross-sectional view ofa hybrid pultrusion plate, illustrating a possible fibre misalignment which deviates from an intended pattern of glass fibre tows 70 and carbon fibre tows 68. It is this type of fibre misalignment the present invention seeks to overcome.

Fig. 12 is a schematic illustration of a pultrusion process of the present invention. The pultrusion system 90 comprises a portion for receiving a plurality of bobbins 93a of carbon fibre material and a plurality of bobbins 93b of glass fibre material which each supply a tow of fibre material from creel 91. In a first step, a carbon fibre preform 110 is pultruded by passing a plurality of tows of carbon fibre material 68 through a guide plate 95 and through a resin bath 96 and then through a first pultrusion die 112.

The cross section of the pultrusion die is shown in the enlarged encircled area at the bottom of Fig. 12, which illustrates the cavity 113 of the pultrusion die 112. In the illustrated embodiment, the cavity 113 for shaping the carbon fibre preform comprises portions with a circular cross section and a portion with a rectangular cross section. Thus, the cross section of the resulting pultruded carbon fibre preform 110 also comprises portions 111 with a circular cross section and a portion 109 with a rectangular cross section, as seen in the encircled area at the top of Fig. 12, which shows a vertical cross section of the pultruded carbon fibre preform 110.

Subsequently, a plurality of pultrusion plates 64 are formed by passing a plurality of resin-impregnated tows of glass fibre material 70 together with the carbon fibre preform 110 through a second pultrusion die 114, which is downstream of the first pultrusion die 112. The pultrusion string is pulled by a pulling mechanism 98 and is cut into individual pultrusion plates of the desired length by cutter 99.

A vertical cross section of the resulting pultrusion plate is shown in Fig. 13. Here, the carbon fibre preform 110, with portions 111 with a circular cross section and portion 109 with a rectangular cross section, is surrounded by a plurality of tows 70 of glass fibre material. As compared to the thickness t of the pultrusion plate 64, the vertical extent h of the portion 109 with rectangular cross section is about 20% of the plate thickness t. In the illustrated embodiment, glass fibre tows 70 are arranged along both lateral edges 83, 84 of the pultrusion plate 64. Also, the carbon fibre preform 110 provides a continuous path of carbon fibre material between the top surface 81 and the bottom surface 82 of the pultrusion plate, which is useful for the lightning protection system of the wind turbine blade.

As also seen in Figs. 12 and 13, the carbon fibre preform 110 comprises a plurality of U-shaped or substantially rectangular-shaped cavities or channels, i.e. the respective spaces in between portions 111, for receiving a plurality of tows 70 of glass fibre material. Such arrangement allows for improved geometry control and avoids/reduces the occurrence of fibre displacement or misalignment. The pultrusion plates 64 can be arranged on a blade shell material 89 in a mould 77 for the blade shell component, and the pultrusion plates 64 can be bonded with the blade shell material to form the blade shell component.

Fig. 14 is a schematic vertical cross-sectional view of a pultrusion plate according to another embodiment of the present invention. Fig. 15 is a perspective view of the pultrusion of the same embodiment, wherein Fig. 14 is a cross sectional view taken along the line a-a' in Fig. 15. Here, the carbon fibre preform has an I-shaped cross section with three rectangular portions, such that at each of the lateral edges 83, 84 of the pultrusion plate 64 carbon fibres extend all the way between the top surface 81 and the bottom surface 82 of the plate. The tows of the glass fibre material 70 are present in the remaining space of the pultrusion plate as seen in the cross section of Fig. 14. Thus, the continuous path of carbon fibre material along the lateral edges may provide an electrically conducting path throughout the vertical direction of the pultrusion plate.

In the embodiment illustrated in Figs. 14 and 15, the carbon fibre preform 110 comprises a horizontally extending portion 116 and a first and second vertically extending portion 118, 120 located at opposing ends of the horizontally extending portion 116, wherein the vertically extending portions 118, 120 extend continuously between the top surface 81 and the bottom surface 82 of the pultrusion plate. This configuration is found to provide good electrical conductivity which is important for the lightning protection system of the blade.

The invention is not limited to the embodiments described herein and may be modified or adapted without departing from the scope of the present invention.

### List of reference numerals

- 4: tower
- 6: nacelle
- 8: hub
- 10: blades
- 14: blade tip
- 16: blade root
- 18: leading edge
- 20: trailing edge
- 30: root region
- 32: transition region
- 34: airfoil region
- 36: pressure side shell part
- 38: suction side shell part
- 40: shoulder
- 41: spar cap
- 42: fibre layers
- 43: sandwich core material
- 45: spar cap
- 46: fibre layers
- 47: sandwich core material
- 50: first shear web
- 51: core member
- 52: skin layers
- 55: second shear web
- 56: sandwich core material of second shear web
- 57: skin layers of second shear web
- 60: filler ropes
- 62: reinforcing structure
- 64: pultrusion plate
- 66: stack of pultrusion plates
- 67: path
- 68: tow of carbon fibre material
- 70: tow of glass fibre material
- 71: row of tows
- 72: column of tows
- 74: tip end of reinforcing structure
- 76: root end of reinforcing structure
- 77: mould
- 78: front edge of reinforcing structure
- 80: rear edge of reinforcing structure
- 81: top surface of pultrusion plate
- 82: bottom surface of pultrusion plate
- 83: first lateral surface of pultrusion plate
- 84: second lateral surface of pultrusion plate
- 85: core material
- 86: carbon biax layer
- 87: current connection terminal
- 88: bond line
- 89: shell material
- 90: pultrusion system
- 91: creel
- 93: bobbin with tow of fibre material
- 94: reinforcement material
- 95: guide plate
- 96: resin bath
- 97: heated die
- 98: pulling mechanism
- 99: cutter
- 100: pultrusion string
- 102: lightning protection system
- 104: down conductor
- 106: tip receptor
- 107: side receptor
- 108: side receptor
- 109: portion of carbon fibre preform with rectangular cross section
- 110: carbon fibre preform
- 111: portion of carbon fibre preform with circular cross section
- 112: first pultrusion die
- 113: cavity of first pultrusion die
- 114: second pultrusion die
- 116: horizontally extending portion
- 118: first vertically extending portion
- 120: second vertically extending portion
- L: length
- I: length of pultrusion plate
- w: width of pultrusion plate
- h: height of pultrusion plate
- La: longitudinal axis of pultrusion plate
- r: distance from hub
- R: rotor radius
- Se: spanwise extent of reinforcing structure
- Ce: chordwise extent of reinforcing structure

## Claims

1. A method of manufacturing a wind turbine blade shell component (38), the method comprising the steps of
pultruding one or more carbon fibre preforms (110) by passing a plurality of resin-impregnated tows of carbon fibre material (68) through a first pultrusion die (112),
pultruding a plurality of pultrusion plates (64) by passing a plurality of resin-impregnated tows of glass fibre material (70) together with the one or more carbon fibre preforms (110) through a second pultrusion die (114),
arranging the pultrusion plates (64) on a blade shell material (89) in a mould (77) for the blade shell component, and
bonding the pultrusion plates (64) with the blade shell material to form the blade shell component.

2. A method according to claim 1, wherein the carbon fibre preform comprises a circular cross section.

3. A method according to claim 2, wherein the circular cross section has a diameter of 0.5-4 mm, preferably 0.5-3 mm.

4. A method according to claim 1, wherein the carbon fibre preform comprises a rectangular cross section.

5. A method according to claim 4, wherein the rectangular cross section has a height of 0.5-5 mm, preferably 0.5-3 mm.

6. A method according to any of the preceding claims, wherein the carbon fibre preform comprises a first portion (109) with a substantially rectangular cross section and a second portion (110) with a substantially circular cross section.

7. A method according to any of the preceding claims, wherein each carbon fibre preform comprises 3-50 tows, preferably 3-20 tows, of carbon fibre material.

8. A method according to any of the preceding claims, wherein each pultrusion plate (64) comprises a top surface (81), an opposing bottom surface (82) and two lateral surfaces (83, 84), wherein carbon fibre material is provided along the entire lateral surfaces (83, 84) of the pultrusion plate.

9. A method according to any of the preceding claims, wherein the second pultrusion die is downstream the first pultrusion die.

10. A method according to any of the preceding claims, wherein the lateral surfaces (83, 84) of each pultrusion plate are free from glass fibres, preferably by providing a continuous path of carbon fibre material along the lateral edges of the pultrusion plate, the continuous path of carbon fibre material extending from the top surface to the opposing bottom surface of the pultrusion plate, and wherein the continuous path of carbon fibre material provides an electrically conducting path throughout the vertical direction of the pultrusion plate.

11. A method according to any of the preceding claims, wherein the pultrusion plates are arranged into adjacent stacks of pultrusion plates, and wherein a continuous path (67) of carbon fibre material extends from the top surface of the uppermost pultrusion plate to the bottom surface of the lowermost pultrusion plate of each stack of pultrusion plates.

12. A pultrusion plate comprising a pultruded carbon fibre preform and a plurality of tows of glass fibre material, wherein the pultrusion plate is obtainable by a method of any of claim 1-11.

13. A pultrusion plate according to claim 12, wherein the pultrusion plate (64) comprises a top surface (81), an opposing bottom surface (82) and two lateral surfaces (83, 84), wherein carbon fibre material is provided along the entire lateral surfaces (83, 84) of the pultrusion plate.

14. A wind turbine blade shell component comprising a plurality of pultrusion plates (64) according to any of claims 12-13.

15. A lightning protection system (102) for a wind turbine blade, the lightning protection system comprising a lightning conductor (104) disposed at least partially in the interior of the blade, one or more electrically conducting lightning receptors (106, 107, 108) disposed on one or more of the surfaces of the blade, wherein the one or more electrically conducting lightning receptors are electrically connected to a spar cap, wherein the spar cap comprises a plurality of pultrusion plates (64) according to any of claims 12-13.
